# FASCICULE DE BREVET EUROPEEN

(11) **EP 0 648 885 B1**
(45) Date de publication et mention de la délivrance du brevet: **28.04.1999**
(21) Numéro de dépôt: 94402277.1
(22) Date de dépôt: 11.10.1994
(51) Int. Cl.: D06F 58/22, B01D 46/42, B01D 35/16

(54) **Dispositif de nettoyage pour filtre du circuit séchage d'une machine**
Einrichtung zur Reinigung eines Filters für das System zum Trocknen von einer Maschine
Device for cleaning the filter of a machine's drying system

(30) Priorité: 15.10.1993 FR 9312289
(43) Date de publication de la demande: 19.04.1995
(73) Titulaire: ESSWEIN S.A., F-85002 La Roche-sur-Yon (FR)
(72) Inventeur: Chabanne, Pascal, F-92402 Courbevoie Cedex (FR); Clement, Jean-Francis, F-92402 Courbevoie Cedex (FR); Merlet, Marie Gerard, F-92402 Courbevoie Cedex (FR); Remeur, Daniel, F-92402 Courbevoie Cedex (FR)
(74) Mandataire: Chaverneff, Vladimir

(56) Documents cités:
- DE-A- 3 817 849
- DE-U- 8 430 916
- FR-A- 2 357 294
- FR-A- 2 457 458
- GB-A- 2 087 029
- GB-A- 2 095 126

## Description

La présente invention se rapporte à un dispositif de nettoyage pour filtre du circuit de séchage par flux d'air chaud d'une machine, en particulier pour une machine lave-linge séchante ou pour un sèche-linge.

Le circuit de séchage par flux d'air chaud d'une machine sèche-linge comporte généralement un filtre disposé près de l'embouchure d'aspiration de l'air chaud passant dans la cuve de la machine. Un tel filtre permet de récupérer diverses fibres et petits fragments qui se détachent du linge à sécher, et qui sont entraînés par ce flux d'air. Ces fibres et fragments ainsi que diverses particules polluantes sont souvent présents en quantités non négligeables dans la machine, et, sans la présence du filtre, se déposeraient sur le condenseur et/ou les surfaces chauffantes du dispositif de chauffage du flux d'air, ce qui, au bout d'un certain temps, risquerait de diminuer nettement l'efficacité du circuit de séchage, et pourrait même provoquer le déclenchement du dispositif de sécurité par suite d'un échauffement trop élevé de la machine.

On connaît un tel filtre qui doit être périodiquement retiré de la machine par l'utilisateur pour être nettoyé en-dehors de la machine. Dans certains cas d'utilisation, lorsqu'une grande quantité de fibres et de fragments se détachent du linge à sécher, les interventions de l'utilisateur doivent être assez rapprochées (fréquemment même après chaque cycle de séchage). On connaît d'après les documents FR-A-2 457 458 et FR-A-2 357 294 des dispositifs de nettoyage automatique de filtres, mais ces dispositifs sont très encombrants et ne conviennent qu'à des installations industrielles.

La présente invention a pour objet un dispositif de nettoyage d'un filtre du type précité, qui réduise les interventions de l'utilisateur en vue de nettoyer ce filtre, et qui puisse même effectuer automatiquement ce nettoyage suffisamment souvent pour qu'il assure son rôle de façon efficace, même en présence de linge duquel se détachent de relativement grandes quantités de fibres et de fragments.

Le dispositif de nettoyage conforme à l'invention comporte des moyens de nettoyage fixes envoyant pendant au moins une partie d'au moins une phase de fonctionnement habituelle de la machine, ou pendant une phase spéciale de nettoyage, un jet d'eau sur le filtre en sens opposé à celui du flux d'air passant par ce filtre. Selon un mode de réalisation de l'invention, ces moyens de nettoyage comportent plusieurs buses réparties vis-à-vis de la face arrière du filtre, c'est-à-dire celle opposée à celle sur laquelle s'amassent les matières polluantes, ces buses étant reliées à une conduite d'amenée d'eau sous pression.

Selon un autre mode de réalisation de l'invention, pour une machine dans laquelle, pendant au moins une phase de son fonctionnement, de l'eau est projetée à proximité du filtre, les moyens de nettoyage comportent des surfaces déflectrices canalisant l'eau ainsi projetée vers la face arrière du filtre. Dans le cas d'une machine lave-linge séchante, les surfaces déflectrices canalisent, en phase d'essorage, une partie de l'eau éjectée du panier rotatif contenant le linge mouillé vers la face arrière du filtre.

La présente invention sera mieux comprise à la lecture de la description détaillée de deux modes de réalisation, pris à titre d'exemples non limitatifs et illustrés par le dessin annexé, sur lequel :
- la figure 1 est une vue partielle en coupe d'une machine lavante-séchante munie d'un dispositif de nettoyage conforme à un premier mode de réalisation de l'invention, et
- la figure 2 est une vue partielle en coupe d'une machine lavante-séchante munie d'un dispositif de nettoyage conforme à un second mode de réalisation de l'invention.

L'invention est expliquée ci-dessous en référence à une machine lave-linge séchante, mais il est bien entendu qu'elle n'est pas limitée à une telle application, et qu'elle peut être mise en oeuvre dans des sèche-linge ou d'autres machines comportant des filtres susceptibles d'être fréquemment obstrués.

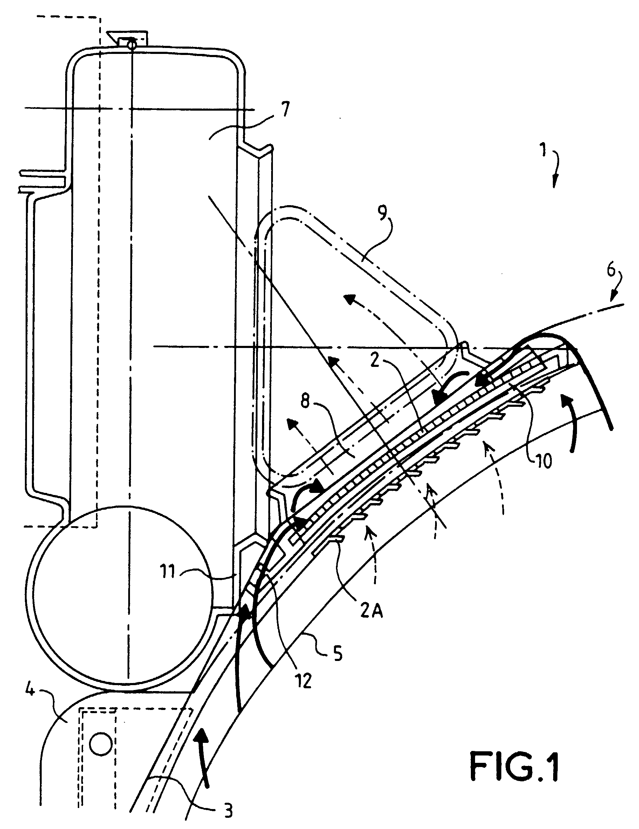

Le mode de réalisation de la figure 1 est plus particulièrement adapté au cas des lave-linge séchants du fait que son dispositif de nettoyage est actif pendant la phase d'essorage d'une telle machine. Cependant, un tel mode de réalisation pourrait également convenir à des équipements à filtre dans lesquels, pendant l'une au moins de leurs phases de fonctionnement, de l'eau est projetée à proximité du filtre.

Sur la figure 1, on n'a représenté que la partie de la machine lavante-séchante 1 qui est proche du filtre 2 à nettoyer. Cette machine 1 comprend essentiellement une cuve 3 avec son dispositif 4 de fixation au bâti (non représenté) de la machine, et un panier cylindrique rotatif 5. On a également représenté partiellement l'ouverture supérieure 6 de la machine, donnant accès au panier, pour permettre l'introduction et l'extraction du linge.

La turbine 7 du circuit de séchage (assurant la circulation de l'air chaud de séchage) est disposée à proximité du filtre 2. Il est toutefois bien entendu que l'emplacement de la turbine, ainsi que des autres éléments du circuit de séchage (condenseur, résistance de chauffage et conduites de circulation d'air, ces autres éléments n'étant pas représentés sur le dessin) peut être différent. Une petite ouverture 8 est pratiquée dans la cuve 3, près de l'ouverture 6, pour l'aspiration du flux d'air chaud ayant passé dans la cuve et chargé de vapeur d'eau provenant du linge à sécher. Cette ouverture 8 est obturée par le filtre 2 qui est chargé de retenir les diverses fibres et particules entraînées par ce courant d'air chaud. Un canal 9 relie l'ouverture 8 à la turbine 7. Le filtre 2 est amovible. Il peut être mis en place et retiré de son logement 10, en étant manipulé dans une direction sensiblement parallèle à son plan par l'utilisateur qui passe la main par l'ouverture 6 d'accès au tambour pour le chargement du linge et son retrait.

La surface du filtre 2 est un peu plus grande que celle de l'ouverture 8, et le filtre n'est pas plaqué contre l'ouverture 8, mais disposé à une faible distance (quelques millimètres) de celle-ci, afin de permettre à l'eau canalisée vers sa face arrière (celle se trouvant du côté du canal 9), de la façon expliquée ci-dessous, d'atteindre cette face arrière. Afin d'éviter que l'eau éjectée du panier 5 vers la face avant (celle sur laquelle se déposent les fibres et particules) du filtre 2 ne vienne contrecarrer l'action de l'eau canalisée vers la face arrière de ce filtre, on dispose avantageusement devant sa face avant, à quelques millimètres de celle-ci, une plaque ajourée ou une grille déflectrice 2A.

Pour canaliser l'eau éjectée du panier, et s'écoulant le long de la face intérieure de la cuve, vers la face arrière du filtre 2, on forme dans la cuve 3 un ou plusieurs légers emboutis profilés 11 à proximité de l'ouverture 8, et on fixe devant leur ouverture des plaques déflectrices 12 qui canalisent l'eau éjectée du panier 5, et frappant sensiblement tangentiellement la face interne de la cuve 3, vers la face arrière du filtre 2 qu'elle débarrasse ainsi des fibres et particules qui s'y sont déposées.

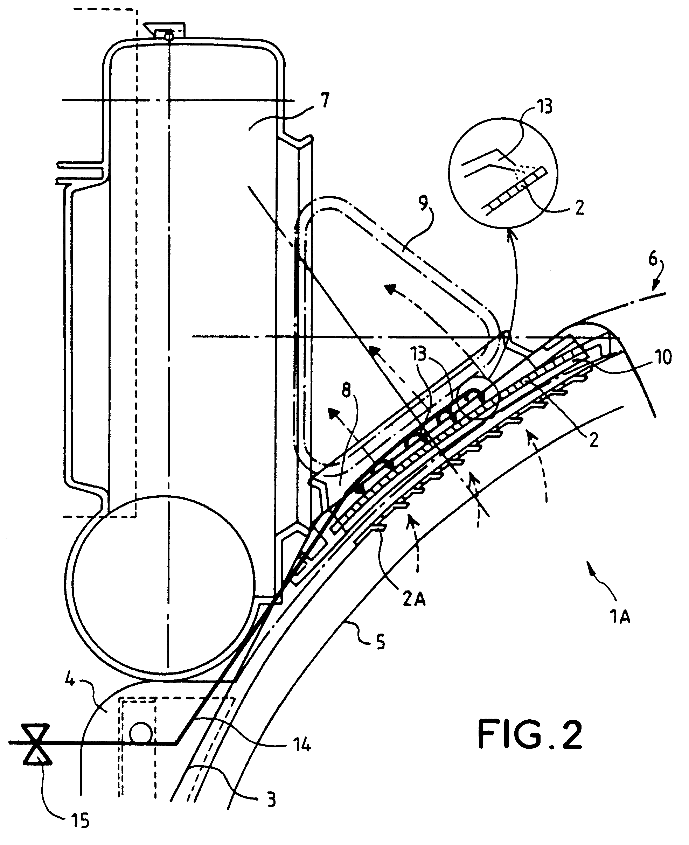

Le mode de réalisation de la figure 2 est mis en oeuvre sur une machine lavante-séchante 1A similaire à celle de la figure 1, et les mêmes éléments y sont affectés des mêmes références numériques. Le dispositif de nettoyage du filtre 2 de la machine 1A comporte essentiellement plusieurs buses 13, disposées en vis-à-vis de la face arrière du filtre 2, et réparties de façon à agir sur pratiquement la totalité de la surface du filtre. Les buses 13 sont orientées obliquement par rapport à la surface du filtre 2, afin d'en détacher le plus facilement possible les matières qui s'y sont disposées. Toutes les buses 13 sont reliées à une conduite 14, commandée par une électro-vanne 15, et reliée au réseau de distribution d'eau. Cette électrovanne, normalement fermée, est ouverte par le programmateur (non représenté) de la machine pendant une phase appropriée du fonctionnement de la machine, par exemple pendant le rinçage ou l'essorage, ou juste avant le séchage. Selon une variante de ce mode de réalisation, la conduite 14 est reliée juste en aval de la vanne (non représentée) d'admission d'eau de la machine.

Selon une variante de l'invention, on combine les deux modes de réalisation décrits ci-dessus, pour augmenter l'efficacité du dispositif de nettoyage. Bien entendu, l'utilisateur a toujours la possibilité de retirer le filtre pour le nettoyer en-dehors de la machine.

## Revendications

1. Dispositif de nettoyage pour filtre (2) d'un circuit de séchage par flux d'air chaud d'une machine électro-domestique comportant une cuve (3) dans laquelle sont disposés les produits à sécher, caractérisé par le fait qu'il comporte des moyens de nettoyage fixes (10, 12, 13) envoyant pendant au moins une partie d'au moins une phase de fonctionnement de la machine un jet d'eau sur le filtre en sens opposé à celui du flux d'air passant par ce filtre.

2. Dispositif selon la revendication 1, caractérisé par le fait que la phase de fonctionnement est une phase habituelle de fonctionnement de la machine.

3. Dispositif selon la revendication 1, caractérisé par le fait que la phase de fonctionnement est une phase spéciale de nettoyage.

4. Dispositif selon l'une des revendications précédentes, caractérisé par le fait que les moyens de nettoyage comportent plusieurs buses (13) réparties vis-à-vis de la face amère du filtre, ces buses étant reliées à une conduite (14) d'amenée d'eau sous pression.

5. Dispositif selon l'une des revendications précédentes, pour une machine dans laquelle, pendant au moins une phase de son fonctionnement, de l'eau est projetée à proximité du filtre, caractérisé par le fait que les moyens de nettoyage comportent des surfaces déflectrices (12) canalisant l'eau ainsi projetée vers la face arrière du filtre.

6. Dispositif selon l'une des revendications précédentes, caractérisé par le fait qu'il est appliqué à une machine lave-linge séchante ou à un sèche-linge.

7. Dispositif selon la revendication 5, caractérisé par le fait qu'il est appliqué à un lave-linge séchant, et que les surfaces déflectrices canalisent, en phase d'essorage, une partie de l'eau éjectée du panier rotatif contenant le linge mouillé vers la face arrière du filtre.

## Patentansprüche

1. Reinigungsvorrichtung für den Filter (2) eines Warmluftstrom-Trockenkreises einer elektrischen Haushaltsmaschine mit einem Behälter (3), in dem die zu trocknenden Produkte untergebracht werden, dadurch gekennzeichnet, daß sie feststehende Reinigungselemente (10, 12, 13) umfaßt, die zumindest während eines Abschnitts wenigstens einer Betriebssphase der Maschine in der dem durch den Filter strömenden Luftstrom entgegengesetzten Richtung einen Wasserstrahl auf den Filter leiten.

2. Reinigungsvorrichtung nach Anspruch 1, dadurch gekennzeichnet, daß die Betriebsphase eine gewöhnliche Betriebsphase der Maschine ist.

3. Reinigungsvorrichtung nach Anspruch 1, dadurch gekennzeichnet, daß die Betriebsphase eine spezielle Phase zur Reinigung ist.

4. Vorrichtung nach einem der vorhergehenden Ansprüche, dadurch gekennzeichnet, daß die Reinigungselemente mehrere Düsen (13) umfassen, die gegenüber der Rückseite des Filters verteilt sind, wobei die Düsen an eine Leitung (14) für die Zuleitung von Wasser unter Druck angeschlossen sind.

5. Vorrichtung nach einem der vorhergehenden Ansprüche für eine Maschine, bei der in zumindest einer ihrer Betriebsphasen Wasser in die Nähe des Filters gesprüht wird, dadurch gekennzeichnet, daß die Reinigungselemente Umlenkflächen (12) umfassen, die das versprühte Wasser zur Filterrückseite leiten.

6. Vorrichtung nach einem der vorhergehenden Ansprüche, dadurch gekennzeichnet, daß sie in einer Wasch-Trocken-Maschine oder in einem Wäschetrockner zum Einsatz kommt.

7. Vorrichtung nach Anspruch 5, dadurch gekennzeichnet, daß sie in einer Wasch-Trocken-Maschine zum Einsatz kommt und daß die Umlenkflächen in der Schleuderphase einen Teil des Wassers, das aus der sich drehenden Trommel, die die nasse Wäsche enthält, herausgeschleudert wird, zur Filterrückseite leiten.

## Claims

1. Device for cleaning the filter (2) of a drying circuit employing a stream of hot air in a domestic electrical appliance comprising a chamber (3) in which the items to be dried are placed, characterized in that it comprises fixed cleaning means (10, 12, 13) which send during at least part of at least one phase of operation of the machine a jet of water onto the filter in the opposite direction to that of the stream of air passing through this filter.

2. Device according to Claim 1, characterized in that the phase of operation is a normal phase of operation of the machine.

3. Device according to Claim 1, characterized in that the phase of operation is a special cleaning phase.

4. Device according to one of the preceding claims, characterized in that the cleaning means comprise a plurality of nozzles (13) distributed so as to face the back of the filter, these nozzles being connected to a pipe (14) supplying water at pressure.

5. Device according to one of the preceding claims, for a machine in which, during at least one phase of its operation, water is thrown in the general direction of the filter, characterized in that the cleaning means comprise deflecting surfaces (12) which channel water thrown in this way towards the back of the filter.

6. Device according to one of the preceding claims, characterized in that it is fitted to a clothes washing-drying machine or to a tumble drier.

7. Device according to Claim 5, characterized in that it is fitted to a clothes washer-drier, and in that during the spinning phase the deflecting surfaces channel some of the water ejected by the rotary drum containing the wet washing towards the back of the filter.
